# FASCICULE DE BREVET EUROPEEN

(11) **EP 0 503 990 B1**
(45) Date de publication et mention de la délivrance du brevet: **01.06.1994**
(21) Numéro de dépôt: 92400492.2
(22) Date de dépôt: 26.02.1992
(51) Int. Cl.: B01J 8/02, B01J 8/04, B01J 19/30, B01D 3/00

(54) **Appareil de distillation-réaction et son utilisation**
Destillations-Reaktionsvorrichtung und ihre Verwendung
Apparatus for distillation-reaction and its use

(30) Priorité: 08.03.1991 FR 9102938; 12.04.1991 FR 9104611
(43) Date de publication de la demande: 16.09.1992
(73) Titulaire: INSTITUT FRANCAIS DU PETROLE, 92502 Rueil-Malmaison (FR)
(72) Inventeur: Alagy, Jacques, F-69260 Charbonnieres (FR); Forestiere, Alain, F-69390 Vernaison (FR); Le Page, Jean-François, F-92500 Rueil Malmaison (FR); Marion, Marie-Claire, F-69100 Villeurbanne (FR); Viltard, Jean-Charles, F-78160 Marly le Roi (FR)

(56) Documents cités:
- EP-A- 0 390 596
- EP-A- 0 448 884
- DE-B- 1 075 613
- FR-A- 1 193 952
- GB-A- 1 019 236

## Description

La présente invention est relative à un appareil de distillation-réaction et à son utilisation pour la mise en oeuvre de réaction chimique et le fractionnement du mélange de réaction.

Elle est également relative à un procédé de préparation d'un éther par réaction d'oléfines sur des alcools dans lequel on effectue concurremment la réaction et la distillation des produits formés en particulier en vue de séparer ces produits des constituants n'ayant pas réagi.

On sait depuis longtemps que, dans le cas d'une réaction équilibrée, la thermodynamique limite la conversion des réactifs. L'introduction d'un des réactifs en excès permet d'augmenter la conversion des autres réactifs. Mais cette méthode est souvent coûteuse car elle nécessite une installation supplémentaire pour récupérer le réactif introduit en excès.

Un moyen élégant de convertir globalement au-delà de l'équilibre thermodynamique est d'appliquer la méthode dite de distillation-réactive. Cette méthode consiste à effectuer dans la même enceinte la réaction, habituellement en présence d'un catalyseur, et la distillation pour séparer les produits des autres constituants au fur et à mesure qu'ils se forment. Cette méthode est par exemple utilisée dans le cas de réactions d'éthérification (US-A-3629478, US-A-4847430 et EP-B-8860).

Le brevet US-A-3629478 propose d'utiliser des plateaux de distillation et de ne disposer le catalyseur que dans les descentes de liquide desdits plateaux de distillation, ceci afin d'éviter l'effet perturbateur de la phase vapeur à travers le catalyseur. Toutefois, la présence du catalyseur dans lesdites descentes crée une perte de charge telle que le liquide a tendance à descendre à contre-courant dans les orifices prévus pour le passage de la vapeur sur la table de travail de chaque plateau de distillation. Ainsi, selon cette réalisation, une partie importante du liquide n'entre pas en contact avec le catalyseur ce qui limite l'efficacité, sur le plan de la réaction, de cet appareil de distillation-réaction.

Le brevet US-A-4847430 décrit la mise en oeuvre des zones de réaction - distillation où le lit catalytique alterne avec la zone de distillation. Au travers du lit catalytique, des passages réservés à la phase vapeur évitent le contact gaz liquide et limitent les problèmes de pertes de charge. Par contre, l'équilibre physique liquide / vapeur n'étant pas réalisé en permanence, il peut y avoir, dans la zone catalytique, épuisement d'un des réactifs.

Cela conduit à une perte d'efficacité sur le plan de la réaction, ceci d'autant plus que la colonne réactive travaille dans des conditions proches de l'équilibre chimique.

Le brevet EP-B-8860 propose d'utiliser une colonne de distillation remplie d'un catalyseur approprié pour la préparation du méthyl-tertio-butyl-éther (MTBE), dans laquelle le catalyseur, selon sa mise en forme, assure également, au moins en partie, la fonction de garnissage pour la distillation, formant ainsi le MTBE et le séparant en même temps des autres constituants présents. Toutefois, la structure globale du garnissage contenant le catalyseur ainsi que son empilement dans la colonne selon la verticale défavorise le contact gaz-liquide et ne présente pas une bonne efficacité sur le plan distillation. Par ailleurs, ce type de remplissage de colonne est coûteux puisqu'il comprend le coût du catalyseur et le coût de fabrication du garnissage catalytique auquel s'ajoute le coût du treillis métallique enroulé autour du matelas catalytique. De plus, lorsqu'il devient nécessaire de changer le catalyseur, on est également obligé de changer le treillis métallique ce qui augmente notablement le coût de cette opération.

La présente invention vise à remédier aux inconvénients des procédés, et des appareils utilisés pour la mise en oeuvre de ces procédés, décrits dans l'art antérieur en proposant un appareil permettant de mettre en oeuvre une réaction équilibrée au delà de l'équilibre thermodynamique dans un appareil comportant une zone de distillation-réaction et permettant d'obtenir une très bonne efficacité à la fois sur le plan de la réaction et sur le plan de la distillation.

A cet effet, l'invention a pour objet un appareil de distillation-réaction comportant:
au moins une zone de distillation-réaction comprenant au moins un lit d'éléments solides, disposé sur un support perforé permettant le passage des fluides et dont les perforations sont suffisamment petites pour retenir lesdits éléments, caractérisé en ce que le lit d'éléments solides comprend en vrac des particules solides catalytiques et au moins un conteneur, renfermant au moins un corps de garnissage de distillation, dont l'enveloppe externe est perméable aux fluides et imperméable auxdites particules solides catalytiques et audit corps de garnissage, ledit conteneur ayant des caractéristiques mécaniques suffisantes pour résister sans déformations excessives, à la charge du catalyseur en vrac.

Dans le cadre de la présente description, le terme support perforé désigne aussi bien une plaque ayant des caractéristiques mécaniques suffisantes pour supporter le poids du lit d'éléments solides et comportant des perforations laissant passer les divers fluides et suffisamment petites pour retenir les éléments solides, qu'un ensemble comprenant une plaque et une grille, ladite plaque comportant des perforations laissant passer les divers fluides mais insuffisamment petites pour retenir tous les éléments solides et ladite grille comportant des mailles laissant passer les divers fluides et suffisamment petites pour retenir les éléments solides. Dans ce deuxième cas, l'association grille et plaque possède des caractéristiques mécaniques suffisantes pour supporter le poids du lit d'éléments solides. La grille et la plaque sont faites à partir de matériaux inertes vis-à-vis des divers fluides et solides avec lequels ces matériaux entrent en contact.

Dans la présente description, le terme appareil de distillation-réaction désigne un équipement dans lequel il est possible de réaliser de façon simultanée une réaction chimique et un fractionnement (habituellement multiétagé) et le terme zone de distillation-réaction la zone dans laquelle se déroule de façon concomitante la réaction et le fractionnement.

Dans l'appareil de distillation-réaction selon la présente invention, grâce à un empilement aléatoire (c'est-à-dire en vrac) à la fois du catalyseur (disposé librement) et du ou des conteneur(s), l'écoulement des flux liquides et gazeux est perturbé en permanence de façon à optimiser les contacts gaz-liquide et liquide-solide (notamment catalyseur). L'équilibre physique liquide-gaz est maintenu en permanence tandis que l'irrigation du catalyseur est réalisée au mieux. Dans la zone de distillation-réaction les fonctions réaction et distillation sont concomitantes ce qui permet une efficacité maximale de la colonne réactive.

Dans le cadre de la présente description, l'expression "sans déformations excessives" signifie que les caractéristiques mécaniques du conteneur sont telles que quelle que soit sa position dans le lit d'éléments solides, il continue à pouvoir assurer l'ensemble des fonctions qui lui sont propres et en particulier à assurer l'existence d'un volume (non nul) vide de tout solide et donc de permettre d'obtenir un taux de vide déterminé par rapport à chaque conteneur et par suite un taux de vide déterminé dans la zone de distillation-réaction.

En d'autre terme, si V est le volume vide du conteneur après sa fabrication, le volume vide V1 du conteneur au sein du lit d'éléments solides sera inférieur ou égal à V sans toutefois pouvoir être nul. De préférence on utilisera des conteneurs fabriqués de telle façon que le volume V1 soit très voisin de V et le plus souvent de telle façon qu'ils ne subissent aucune déformation sous le poids de la charge du catalyseur. Ainsi, dans cette forme préférée de réalisation, V1 est compris entre environ 80 et 100 % et le plus souvent entre environ 90 et 100 % de la valeur V.

Les applications de l'appareil selon la présente invention sont très variées. Cet appareil est aisément modulable en fonction des besoins inhérents à l'application. Ainsi, on sélectionnera le catalyseur, de type hétérogène, en fonction de la réaction concernée.

Dans une forme préférée de réalisation de l'invention, le lit d'éléments solides comprendra une pluralité (c'est-à-dire deux ou plus) de conteneurs. Selon une forme particulière de mise en oeuvre de cette forme préférée de réalisation de l'invention, un nombre limité de conteneur, souvent de 1 à 100 % et de préférence de 1 à 90 % des conteneurs présents dans le lit d'éléments solides, pourront renfermer au moins un corps de garnissage de distillation. Dans cette mise en oeuvre particulière, on aura ainsi dans le lit d'éléments solides au moins un conteneur vide.

Pour les conteneurs renfermant au moins un corps de garnissage, on choisira le type de corps de garnissage de distillation suivant l'efficacité nécessaire à la fonction distillation.

Par corps de garnissage de distillation, on désigne dans la présente description tous les corps de garnissage bien connus des hommes du métier tels que par exemple des solides sous forme d'anneaux, d'extrudés polylobés ou de selles. A titre de corps de garnissage particulier que l'on peut utiliser dans le cadre de la présente invention on peut citer, à titre d'exemple non limitatif, les anneaux de Raschig, les anneaux de Pall, les anneaux d'Intos, les selles de Berl, les selles Novalox et les selles Intalox. Il est également possible d'utiliser des corps de garnissage géométriquement réguliers tels que par exemple ceux développés, il y a déjà 25 ans par la société SULZER ou ceux décrits dans les documents de brevets US-A-3679537, EP-B-70917, EP-A-212202, FR-A-2637059 et FR-A-2637060. On propose aussi comme corps de garnissage des tampons tricotés enroulés de Multiknit ou même des morceaux de grillage. Pour une description de ces corps de garnissage de distillation, on peut également consulter la nouvelle édition en anglais de Ullmann's Encyclopedia of Industrial Chemistry Volume B3, Unit Operation II, Chapitre 4 Distillation and Rectification en particulier pages 70 à 92.

Dans une forme préférée de réalisation de l'invention, le lit d'éléments solides comprendra une pluralité (c'est-à-dire deux ou plus) de conteneurs, chacun d'entre eux pouvant renfermer un ou plusieurs corps de garnissage. Les divers conteneurs peuvent être identiques entre eux ou différents les uns des autres par exemple par leur taille, leur forme, ou le matériau à partir duquel ils sont fabriqués. Chaque conteneur "non vide" peut renfermer un ou plusieurs corps de garnissage, lesdits corps pouvant être identiques ou différents les uns des autres par exemple par leur taille, leur forme, ou le matériau à partir duquel ils sont fabriqués.Les divers conteneurs vides ou "non vides" peuvent être identiques entre eux ou différents les uns des autres par exemple par leur taille, leur forme ou par le matériau à partir duquel ils sont fabriqués. Le plus souvent le lit d'éléments solides comprendra plusieurs conteneurs identiques entre eux. Au sens de la présente description on inclut les cas où le corps de garnissage forme un tout avec le conteneur, c'est-à-dire le cas où ledit corps et l'enveloppe du conteneur sont solidaires l'un de l'autre tel que cela est par exemple le cas lorsque le corps de garnissage est un treillis par exemple métallique ou lorsque l'enveloppe et le corps de garnissage sont fabriqués à partir du même grillage ou tissu.

L'un des principaux intérêts de l'appareil de la présente invention est qu'il permet, sans difficulté particulière, le recyclage du ou des conteneur(s) renfermant le ou les corps de garnissage de distillation. En effet, par exemple par un tamisage grossier on peut habituellement séparer les particules solides catalytiques (qui ont le plus souvent des dimensions inférieures aux dimensions des conteneurs) du ou des conteneurs enveloppant le (ou les) corps de garnissage de distillation. A la suite de ce tamisage, le catalyseur usé est éliminé tandis que le ou les conteneurs du ou des corps de garnissage de distillation est ou sont réintroduit(s) dans l'appareil pour une nouvelle utilisation. Ce recyclage, de mise en oeuvre extrêmement facile, représente une économie financière conséquente ; selon la présente invention, seul le catalyseur est remplacé. On peut aussi envisager d'éliminer le catalyseur usé, par exemple par aspiration ou par entraînement, hors de la zone de distillation-réaction tout en laissant dans cette zone les conteneurs renfermant le ou les corps de garnissage de distillation puis de remplacer ce catalyseur usé ainsi éliminé par du catalyseur neuf.

Selon la présente invention, l'enveloppe externe fermée formant le conteneur et renfermant ou non le ou les corps de garnissage est perméable aux fluides c'est-à-dire aux liquides et aux gaz et imperméable aux particules solides catalytiques (catalyseur) et au(x) corps de garnissage renfermé(s) dans ledit conteneur. Cette enveloppe empêche ainsi la rentrée des particules solides dans le conteneur et la sortie du ou des corps de garnissage dudit conteneur tout en autorisant le passage des liquides et des gaz à travers ledit conteneur. Les corps de garnissage conservent ainsi toute leur efficacité en distillation.

L'enveloppe est habituellement réalisée à partir d'un matériau solide qui peut être un matériau perméable ou poreux ou même un matériau imperméable dans lequel on a prévu des ouvertures (ou pores) ayant une taille suffisamment petite pour maintenir les particules solides catalytiques à l'extérieur du conteneur et le (ou les) corps de garnissage de distillation à l'intérieur du conteneur et permettant le passage des fluides à travers ledit conteneur.

Il est possible de mieux préciser les caractéristiques géométriques de ces ouvertures, sans que cela ne soit considéré comme une limitation de la présente invention, en tenant compte du fait qu'habituellement le ou les corps de garnissage ont des dimensions telles que leur plus petite dimension est au moins égale et le plus souvent supérieure à la plus petite dimension de la plus petite des particules solides catalytiques. Dans ce cas, si la plus petite dimension de la plus petite particule solide catalytique est égale à "n" mètre (m), alors la plus grande dimension des ouvertures permettant le passage des fluides sera le plus souvent inférieure ou égale à "0,9xn" m et de préférence inférieure ou égale à "0,5xn" m. Il n'y a en principe pas de limite pour les dimensions des particules solides catalytiques ou grains de catalyseur et la limite inférieure de la plus grande dimension des ouvertures sera égale à la dimension minimum permettant le passage des fluides et en particulier du liquide. Dans la grande majorité des cas, la zone de distillation-réaction contiendra des catalyseurs dont la granulométrie peut être comprise entre 5x10⁻⁶m et 2x10⁻¹m. A titre d'exemple non limitatif, dans le cas de l'utilisation d'un catalyseur acide pour la synthèse d'un éther à partir d'une oléfine et d'un alcool, les grains de catalyseur ont le plus souvent une granulométrie comprise entre 1x10⁻⁴ m et 2x10⁻²m.

Comme exemple de matériau utilisable pour former l'enveloppe du conteneur, on peut citer les matériaux tissés ou les matériaux non-tissés. La matière utilisable pour former l'enveloppe des conteneurs peut être d'origine naturelle telle que minérale, végétale ou animale, ou encore d'origine synthétique. Comme matière on peut citer, à titre d'exemple non limitatif, le polypropylène, les polyesters, les polyamides, l'aluminium, le cuivre, le titane, le nickel, le platine, l'acier inoxydable ou un grillage ou treillis métallique, les dimensions des ouvertures ou maille de ce grillage ou treillis étant telles que définies ci-avant.

La matière choisie devra être physiquement et chimiquement inerte vis-à-vis des fluides et des solides avec lesquels elle entre en contact.

Lorsque la matière choisie pour former l'enveloppe du conteneur n'a pas de caractéristiques mécaniques suffisantes pour permettre d'obtenir un conteneur capable de résister au poids du catalyseur en vrac, on inclura des éléments de renforcement mécanique tels que par exemple des tiges d'acier ou tout autre moyen connu des hommes du métier permettant de fabriquer un conteneur ayant les caractéristiques mécaniques souhaitées.

Dans le cas de conteneurs non vides, selon le (ou les) corps de garnissage de distillation sélectionné(s) on choisira de préférence le matériau constituant l'enveloppe du conteneur de manière à ce que l'association des deux permette d'obtenir un ensemble corps de garnissage plus enveloppe du conteneur ayant une certaine rigidité c'est-à-dire doué d'une résistance à l'écrasement suffisante pour qu'un conteneur situé à la base du lit d'éléments solides ne soit pas écrasé par le poids dudit lit. Ainsi si le corps de garnissage de distillation est rigide, l'enveloppe pourra être réalisée à partir d'un matériau souple (par opposition à rigide). Au contraire, si le corps de garnissage de distillation est peu rigide, l'enveloppe sera de préférence réalisée à partir d'un matériau rigide.

L'invention permet une bonne maîtrise du taux de vide dans le (ou les) lit(s) d'éléments solides de la zone de distillation-réaction, une bonne maîtrise du taux de remplissage de cette zone et au cours de l'utilisation de l'appareil, une bonne maîtrise des pertes de charge. Le taux de vide à l'intérieur du (ou des) lit(s) d'éléments solides de la zone de distillation-réaction peut être fixé à une valeur préalablement choisie qui est obtenue par exemple en choisissant le nombre de conteneurs inclus dans le lit d'éléments solides. Le taux de vide varie également en fonction du nombre de conteneurs vides et du nombre de conteneurs non vides ainsi qu'en fonction du mode de remplissage du conteneur (remplissage régulier ou non, remplissage partiel etc.) et/ou la qualité et la quantité de corps de garnissage de distillation renfermé dans chaque conteneur non vide.

Dans une forme de réalisation particulière de l'invention, un certain nombre de conteneurs, c'est-à-dire chaque conteneur ou un certain nombre d'entre eux, comportera au moins un moyen, et de préférence au moins deux moyens, ayant la double fonction de renforcement mécanique dudit conteneur et de maintien d'un espace minimum entre ledit conteneur et le conteneur le plus proche en contact avec l'extrémité dudit moyen et/ou de l'une des surfaces solides la plus proche en contact avec l'extrémité dudit moyen. Ce ou ces moyens peuvent être un ou plusieurs bourrelet(s) ou ailette(s) rigide(s). Ils permettent de réguler le taux de vide et le taux de remplissage en particules solides catalytiques à l'intérieur du (ou des) lit(s) d'éléments solides de la zone de distillation-réaction et également une bonne maîtrise des pertes de charges.

Le nombre, la dimension et la qualité des ailettes permettront de déterminer le taux de vide et le taux de remplissage de la zone de distillation-réaction. De la même façon, ces ailettes pourront permettre de définir et de moduler la perte de charge.

En effet, plus la dimension et le nombre d'ailettes seront importants, plus la place disponible pour le catalyseur, entre les conteneurs, renfermant le ou les corps de garnissages de distillation, sera importante. Par suite, pour un même conteneur de corps de garnissage de distillation, plus le taux de remplissage de la colonne sera élevé et plus le taux de vide sera faible.

Ces ailettes doivent présenter une rigidité importante. Elles doivent être douées d'une résistance à l'écrasement, de façon à assurer leur fonction d'espacement du ou des conteneurs entre eux et aussi avec les parois de l'appareil. Ces ailettes peuvent comporter une plaque, un renfort ou une tige de renforcement ou plus simplement résulter de la soudure ou du collage des extrémités de l'enveloppe.

La dimension de l'ailette est liée à la dimension du conteneur. Sa longueur (L) est le plus souvent comprise entre "0,01xp" m et "10xp" m et de préférence entre "0,05xp" m et "1xp" m, si "p" désigne la plus grande dimension du conteneur. L'épaisseur des ailettes peut varier dans de larges proportions; elle est le plus souvent compris entre 1x10⁻⁴m et 5x10⁻² m. Le nombre d'ailettes n'est pas limité. Il peut par exemple être de 1 à 20 et sera le plus souvent de 2 à 10. Dans un exemple de réalisation de fabrication de conteneurs comportant des ailettes, de mise en oeuvre particulièrement facile, ceux-ci comporteront deux ailettes.

La plus grande dimension des conteneurs sera habituellement inférieure à 0,1 fois, et de préférence inférieure à 0,07 fois, le diamètre de la zone de distillation réaction dans le cas le plus fréquent où celle-ci a une section sensiblement circulaire. Il est cependant possible, sans sortir du cadre de la présente invention, d'utiliser des conteneurs dont la plus grande dimension peut avoir une valeur supérieure à 0,1 fois le diamètre de la zone de distillation réaction et au plus égale au diamètre de ladite zone.

Le plus souvent, les conteneurs vides seront réalisés à l'aide d'un matériau présentant des caractéristiques mécaniques suffisantes pour qu'il ne soit pas indispensable d'inclure des moyens mécaniques de renforcement pour obtenir les caractéristiques mécaniques souhaitées pour le conteneur ainsi fabriqué. Dans ce cas, on choisira par exemple des matériaux métalliques tels que l'aluminium, l'acier inoxydable, le plus souvent sous forme de grillage ou treillis métallique. La forme géométrique des conteneurs n'est pas critique ; ils peuvent être sensiblement tétraédriques, sensiblement octaédriques, sensiblement sphériques ou de tout autre forme.

Selon une forme avantageuse de réalisation de l'invention, le lit d'éléments solides est disposé entre ledit support perforé et un dispositif perforé similaire permettant le passage des fluides et dont les perforations sont suffisamment petites pour retenir lesdits éléments entre ledit support et ledit dispositif. Cette forme de réalisation permet de diminuer la mobilité des éléments solides formant ledit lit et d'éviter largement d'éventuelles ségrégations entre les particules solides catalytiques et les conteneurs. Il est préférable que le lit d'éléments solides occupe tout le volume de la zone de distillation-réaction entre ledit support et ledit dispositif perforé.

L'appareil de distillation-réaction selon l'invention comprendra de préférence au moins deux zones de distillation-réaction, contenant chacune au moins un lit d'éléments solides, lesdites zones n'étant pas en contact l'une avec l'autre, c'est-à-dire que l'appareil comporte alors entre les zones successives de distillation-réaction des zones ou espaces vides et/ou comprenant des plateaux ou systèmes de redistribution de liquide et/ou des zones de distillation (comprenant par exemple des plateaux à calottes, des plateaux à clapets etc.) et/ou des zones comprenant des corps de garnissage, lesdits corps étant éventuellement renfermés dans des conteneurs.

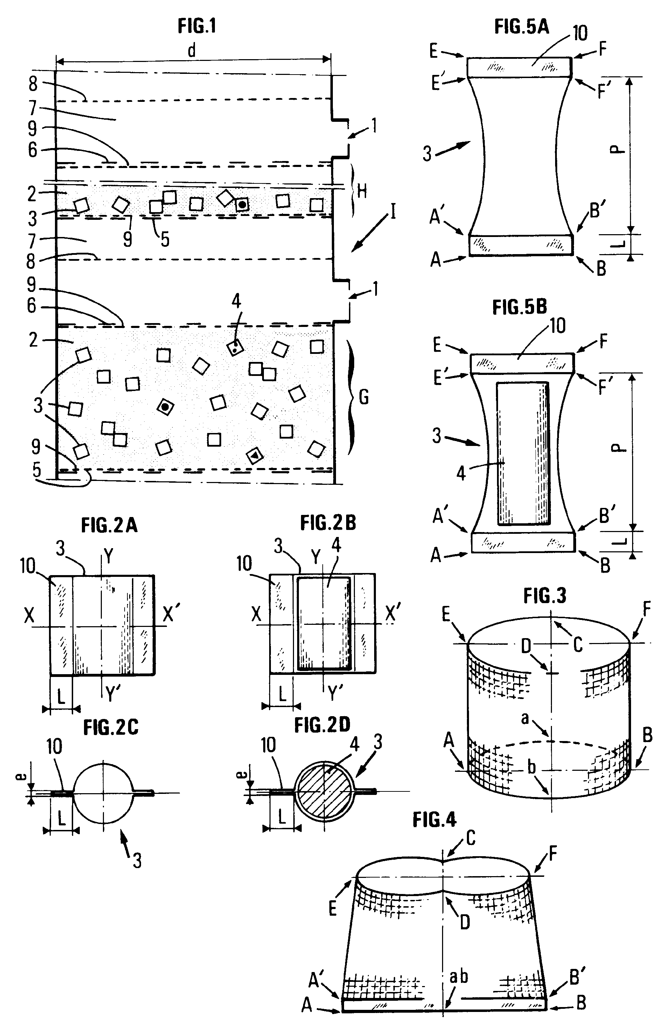

La figure 1 représente schématiquement une partie d'un appareil (I) de distillation-réaction selon l'invention, comprenant selon la forme avantageuse de réalisation schématisée sur cette figure, deux zones (G et H) de distillation-réaction, une zone (7) renfermant un plateau (8) de redistribution de liquide et séparant les zones (G) et (H) et également une zone (7) surmontant la zone (H). Cet appareil a la forme d'une colonne sensiblement cylindrique et verticale de diamètre (d) sensiblement constant sur toute la hauteur de la colonne. Chacune des zones de distillation-réaction (G) et (H) comprend en vrac, sur un support perforé (5) associé à une grille fine ou un tissu (9) (présentant des ouvertures plus petites laissant passer le flux gazeux ascendant et le flux liquide descendant et retenant les grains du catalyseur), un catalyseur en grain (2) et des conteneurs (3) dont certains renferment un ou deux (dans le cas de réalisation schématisée sur la figure 1) corps (4) de garnissage de distillation. Dans le cas particulier schématisé sur la figure 1, les conteneurs non vides renferment des corps de garnissage différents et représentent 12,5 % de la totalité des conteneurs. Le lit d'éléments solides comprenant les grains de catalyseur (2) et les conteneurs (3) est surmonté par une plaque perforée (6) fixée dans la colonne par des moyens non représentés sur la figure 1. Les éléments solides sont introduits dans la colonne par des trous d'hommes (1) et la plaque (6) (ou les éléments nécessaires à sa fabrication) est installée ensuite dans la colonne de manière à limiter au maximum les mouvements possibles desdits éléments solides et en particulier des grains de catalyseur. Dans la forme avantageuse de réalisation schématisée sur la figure 1, la plaque (6) bloque le lit d'éléments solides et limite le tassement des grains de catalyseur. Les supports (5) et les plaques (6) sont maintenus en place dans la colonne par tout moyen adéquat tel que par exemple des taquets non représentés sur la figure 1 ou par soudure.

Dans le cas schématisé sur la figure 1 où les supports (5) sont associés à un tissu (9) (ou à une grille), celui-ci sera fixé par tout moyen adéquat au support (5) ou de préférence à la paroi de l'appareil. Dans le cas de l'utilisation d'une grille métallique celle-ci pourra par exemple être fixée par soudure au niveau des parois de l'appareil. La même disposition pourra être prise pour les plaques (6) dans le cas où leurs ouvertures sont trop grandes pour retenir les grains du catalyseur employé, la grille ou le tissu (9) pourra dans ce cas être fixé(e) de préférence au dessous des plaques (6) comme cela est schématisé sur la figure 1.

La figure 2A est une vue d'un conteneur (3) vide. La figure 2B est une coupe vue de face d'un conteneur (3) renfermant un corps de garnissage (4). Ces conteneurs comportent deux ailettes (10) de longueur (L). La figure 2C est une vue en coupe, selon un plan perpendiculaire à l'axe yy′ et passant par l'axe xx′, du conteneur représenté sur la figure 2A sur laquelle les ailettes (10) ont une épaisseur (e). De même, la figure 2D est une vue en coupe, selon un plan perpendiculaire à l'axe yy′ et passant par l'axe xx′, du conteneur représenté sur la figure 2B sur laquelle les ailettes (10) ont une épaisseur (e).

Les figures 3, 4, 5A et 5B illustrent les étapes de fabrication d'un conteneur, renfermant ou non un corps de garnissage de distillation relatif à l'invention. Dans le cas schématisé sur les figures 2B, 2D et 5B, le corps de garnissage de distillation est de forme cylindrique (anneau Pall ou anneau de Raschig par exemple). Pour la fabrication des conteneurs, on part d'une portion de tube en matière poreuse ou perméable, par exemple en tissu métallique. La section droite de ce tube peut être circulaire, ovale ou avoir tout autre forme; le tube sera donc qualifié ci-après de "cylindrique ou équivalent". Dans cette définition on inclut aussi le cas où la portion de tube ne serait pas exactement cylindrique ou équivalente, c'est-à-dire que l'arête du cylindre n'aurait pas la même longueur en tous points. Ceci pourrait être réalisé par exemple en tranchant obliquement et non perpendiculairement un tube de plus grande longueur lorsqu'on veut former la portion de tube nécessaire à la fabrication du conteneur. Pour la fabrication des conteneurs non vides, le diamètre (moyen) du tube utilisé est le plus souvent au moins supérieur à 1,1 fois le diamètre du corps de garnissage de distillation.

Les bases supérieure et inférieure sont initialement ouvertes (Figure 3). On rapproche les deux demi-circonférences (a) et (b) définies par leurs extrémités communes A et B jusqu'à les mettre en contact et on fixe ensemble, par exemple par soudage, ces deux demi-circonférences, qui forment alors un bourrelet (une ailette) sensiblement linéaire ABB′A′(Figure 4).

Dans les cas des conteneurs non vides, on introduit le corps (4) de garnissage de distillation (ou les corps de garnissage) (Figure 5B) dans le sac dont le fond a été fermé comme expliqué plus haut, puis on répète l'opération de rapprochement et fixation cette fois avec les demi-circonférences définies par leurs extrémités communes C et D ou E et F ou tout couple de points symétrique par rapport au centre de la section du tube. Aussi bien dans le cas des conteneurs vides que dans celui des conteneurs non vides, après fixation, par exemple par soudage des demi-circonférences, on a formé un bourrelet (une ailette) sensiblement linéaire EE′FF′(Figures 5A et 5B). Les conteneurs (renfermant ou non le corps de garnissage de distillation) ainsi obtenus possèdent deux ailettes dont la taille est modulable. La longueur L de chacune de ces ailettes est égale respectivement à AA′ ou BB′ et à EE′ ou FF′. Cette longueur est fonction de la largeur de la soudure. Son épaisseur est environ 2 fois supérieure à l'épaisseur du matériau constituant le tube. La dimension de ces ailettes selon l'axe sensiblement parallèle à l'axe défini par les extrémités AB et EF est sensiblement égale à la longueur de chaque demi-circonférence qui lui a donné naissance. Dans le cas de réalisation schématisée sur ces figures la plus grande dimension "p" (figures 5A et 5B) du conteneur est sensiblement égale à la plus grande dimension du corps de garnissage renfermé dans ledit conteneur.

La présente invention a également pour objet l'utilisation de l'appareil décrit ci-avant pour la mise en oeuvre de réactions chimiques et le fractionnement du mélange de réaction. En particulier l'invention concerne l'utilisation de l'appareil décrit ci-avant pour la production d'éthers par réaction d'oléfines, ayant de 3 à 8 atomes de carbone dans leur molécule, avec des alcools ayant de 1 à 6 atomes de carbone dans leur molécule. A titre d'exemple particulier des oléfines que l'on peut utiliser, on peut citer le propène, l'isobutène, ou les autres butènes isomères et l'isoamylène ou les autres pentènes isomères. De même à titre d'exemple d'alcools que l'on peut employer on peut citer le méthanol, l'éthanol, le n-propanol, l'isopropanol et les butanols. Les éthers les plus souvent fabriqués industriellement de nos jours comprennent le méthyltertiobutyléther (MTBE), l'éthyltertiobutyléther (ETBE), l'isopropyltertiobutyléther (IPTBE), le méthyltertioamyléther (TAME) et l'éthyltertioamyléther (ETAE).

L'invention concerne aussi le procédé de préparation d'un éther par réaction d'oléfines, ayant de 3 à 8 atomes de carbone dans leur molécule, avec des alcools ayant de 1 à 6 atomes de carbone dans leur molécule, en présence d'un catalyseur acide sous forme de particules solides, dans lequel on effectue concurremment la réaction et la distillation des produits formés au cours de ladite réaction dans un appareil tel que décrit ci-avant et dans lequel on récupère en continu l'éther formé. Le catalyseur acide que l'on utilise le plus fréquemment pour effectuer cette réaction est une résine échangeuse d'ions sous forme acide telle que par exemple une résine sulfonée ( en particulier une résine polystyrènedivinylbenzène sulfonée comme par exemple l'Amberlyst 15 fabriqué par Rohm et Haas). On utilisera de préférence des oléfines ayant de 4 à 6 atomes de carbone dans leur molécule et de préférence des alcools ayant de 1 à 4 atomes de carbone dans leur molécule. Le plus souvent les oléfines utilisées seront des oléfines tertiaires.

Les conditions de préparation d'éther à partir d'au moins une oléfine et d'au moins un alcool sont des conditions classiques bien connues de l'homme du métier. A titre indicatif on maintiendra en général un rapport de reflux par rapport au distillat (c'est-à-dire un rapport entre le volume de liquide reflué et le volume de liquide soutiré) d'environ 0,1 : 1 à environ 20 : 1, de préférence d'environ 0,5 : 1 à environ 5 : 1. On opère le plus souvent, à l'intérieur de l'appareil (C) dans un domaine de pression et de température assez large: par exemple, de 100 à 3000 kilopascals (kPa), de préférence de 200 à 2000 kPa pour la pression et de 10 à 200°C, de préférence de 40 à 120°C pour la température (dans tout l'appareil). Chaque lit d'éléments solides comprenant les particules solides catalytiques occupe toute la section sensiblement circulaire de la zone de distillation-réaction. Les particules solides peuvent être conditionnées sous toute forme adéquate, notamment sous forme sensiblement cylindrique ou sous forme sensiblement sphérique.

### Exemple 1

La détermination de la hauteur équivalente en plateaux théoriques (HEPT) permet de caractériser l'efficacité d'un appareil de distillation-réaction sur le plan de la distillation. Dans cet exemple, les HEPT ont été déterminées par la méthode dite de Mac Cabe et Thiele en distillant, à reflux total, un mélange binaire méthanol-éthanol. A l'équilibre, l'analyse (indice de réfraction) du distillat (échantillon prélevé en haut de colonne) et du résidu (bouilleur) permet d'obtenir graphiquement, à partir du diagramme d'équilibre liquide/vapeur le nombre de plateaux théoriques de la colonne. Les expériences ont été faites dans un appareil de laboratoire, ayant la forme d'une colonne de section cylindrique de diamètre intérieur de 60 millimètres (mm), disposée sur un ballon (bouilleur) de 1 litre, équipée d'un réfrigérant et d'un système de reflux. L'appareil est muni de deux prises de température, en haut et en bas de colonne. Ces expériences sont faites à reflux total. A l'équilibre thermique, on prélève un échantillon dans le ballon (Résidu ou Soutirat), un échantillon en haut de colonne au niveau du reflux (Distillat). L'appareil "C1 " est rempli sur une hauteur de 600 mm avec le garnissage pour colonne réactive décrit dans le texte du brevet EP-B-8860 et schématisé sur les figures 2 et 3 de ce brevet. Ce garnissage repose sur un support perforé dont les ouvertures circulaires ont un diamètre de 10 mm. Dans un appareil "C2" identique à l'appareil "C1" on fixe sur le support perforé une grille ayant des mailles carrées de 0,3 mm de coté. On introduit en vrac des conteneurs dont la plus grande dimension est de 15 mm et dont l'enveloppe est en polypropylène tissé ayant des mailles carrées de 0,3 mm de coté. Ces conteneurs renferment chacun un anneaux de Pall. La hauteur totale du lit est de 600mm. Dans chacune des deux expériences, le taux de remplissage de la colonne, en poids de catalyseur sec, est identique. Le catalyseur utilisé est la résine sulfonée vendue par la société Rohm & Haas sous le nom commercial Amberlyst 15. Dans le cas de l'appareil "C1 " on trouve un HEPT de 0,4 m et dans le cas de l'appareil "C2" de 0,3 m. L'appareil selon l'invention permet donc un gain important en efficacité de distillation puisque on a un gain de 25 % sur la hauteur d'un plateau théorique.

### Exemple 2

Pour simuler le réacteur de finition d'une unité industrielle, on réalise la synthèse du MTBE dans une colonne réactive expérimentale. Elle est alimentée par une charge renfermant du méthanol et un mélange de butènes et butanes contenant environ 25% d'isobutène déjà converti à 80% en MTBE. La première expérience (I) est menée avec l'appareil "C1" décrit dans l'exemple 1. Dans la deuxième expérience (II), qui illustre la présente invention, on utilise l'appareil "C2" décrit dans l'exemple 1. En opérant à une pression de l'ordre de 0,5 Mégapascal (MPa), à une température comprise entre 60 et 80°C et en maintenant un rapport de reflux de l'ordre de 1:1, on convertit en MTBE environ 60% de l'isobutène résiduel dans la première expérience contre environ 83% dans la deuxième expérience.

L'appareil selon la présente invention permet donc d'obtenir une conversion nettement supérieure à celle obtenue avec un appareil réalisé selon l'enseignement du brevet EP-B-8860.

## Revendications

1. Appareil de distillation-réaction comportant :
au moins une zone de distillation-réaction comprenant au moins un lit d'éléments solides disposé sur un support perforé permettant le passage des fluides et dont les perforations sont suffisamment petites pour retenir lesdits éléments, le lit d'éléments solides comprenant en vrac des particules solides catalytiques et une pluralité de conteneurs dont l'enveloppe externe est perméable aux fluides et imperméable auxdites particules solides catalytiques, ledit conteneur ayant des caractéristiques mécaniques suffisantes pour résister, sans déformations excessives, à la charge du catalyseur en vrac,
caractérisé en ce que de 1 à 100 % des conteneurs renferment au moins un corps de garnissage de distillation.

2. Appareil selon la revendication 1 dans lequel un certain nombre de conteneurs comporte au moins un moyen ayant la double fonction de renforcement mécanique dudit conteneur et de maintien d'un espace minimum entre ledit conteneur et l'un au moins des éléments suivants : le conteneur le plus proche en contact avec l'extrémité dudit moyen, l'une des surfaces solides la plus proche en contact avec l'extrémité dudit moyen.

3. Appareil selon l'une des revendications 1 ou 2 dans lequel un certain nombre de conteneurs comporte au moins deux moyens ayant chacun la double fonction de renforcement mécanique dudit conteneur et de maintien d'un espace minimum entre ledit conteneur et l'un au moins des éléments suivants : le conteneur le plus proche en contact avec l'extrémité desdits moyens, l'une des surfaces solides la plus proche en contact avec l'extrémité desdits moyens.

4. Appareil selon l'une des revendications 1 à 3 dans lequel le lit d'éléments solides est disposé entre ledit support perforé et un dispositif perforé similaire permettant le passage des fluides et dont les perforations sont suffisamment petites pour retenir lesdits éléments entre ledit support et ledit dispositif.

5. Appareil selon la revendication 4 dans lequel le lit d'éléments solides occupe tout le volume de la zone de distillation-réaction compris entre ledit support et ledit dispositif perforé.

6. Appareil selon l'une des revendications 1 à 5 caractérisé en ce qu'il comprend au moins deux zones de distillation-réaction, contenant chacune au moins un lit d'éléments solides, lesdites zones n'étant pas en contact l'une avec l'autre.

7. Utilisation d'un appareil selon l'une des revendications 1 à 6 pour la mise en oeuvre de réactions chimiques et le fractionnement du mélange de réaction.

8. Utilisation d'un appareil selon l'une des revendications 1 à 6 pour la production d'éthers par réaction d'oléfines, ayant de 3 à 8 atomes de carbone par molécule, avec des alcools ayant de 1 à 6 atomes de carbone par molécule.

9. Procédé de préparation d'un éther par réaction d'oléfines, ayant de 3 à 8 atomes de carbone par molécule, avec des alcools ayant de 1 à 6 atomes de carbone par molécule, en présence d'un catalyseur acide sous forme de particules solides, selon lequel on effectue concurremment la réaction et la distillation des produits formés au cours de ladite réaction dans un appareil selon l'une des revendications 1 à 6 et dans lequel on récupère en continu l'éther formé.

## Patentansprüche

1. Destillations-Reaktions-Vorrichtung, umfassend:
wenigstens eine Destillations-Reaktions-Zone, die wenigstens ein Bett aus Feststoffelementen umfasst, das auf einem perforierten Träger angeordnet ist, der den Durchgang der Fluide ermöglicht und dessen Perforationen ausreichend klein sind, um diese Elemente zurückzuhalten, wobei das Bett aus den Feststoffelementen lose katalytische Feststoffpartikel und eine Vielzahl von Behältern umfasst, deren Außenhülle permeabel für die Fluide und impermeabel für diese katalytischen Feststoffpartikel ist, wobei der Behälter über ausreichende mechanische Eigenschaften verfügt, um ohne übermäßige Verformungen beständig gegen die Last des losen Katalysators zu sein,
dadurch gekennzeichnet, daß von 1 bis 100 % der Behälter wenigstens einen Destillations-Füllkörper umfassen.

2. Vorrichtung nach Anspruch 1, bei der eine gewisse Anzahl von Behältern wenigstens ein Mittel umfasst, das die Doppelfunktion der mechanischen Verstärkung dieses Behälters und der Aufrechterhaltung eines Minimalraumes zwischen diesem Behälter und wenigstens einem der folgenden Elemente hat: der nächste Behälter in Kontakt mit dem Ende dieses Mittels, eine der am nächsten benachbarten Feststofflächen, die in Kontakt mit dem Ende dieses Mittels steht.

3. Vorrichtung nach einem der Ansprüche 1 oder 2, bei der eine gewisse Anzahl von Behältern wenigstens zwei Mittel umfasst, die je die Doppelfunktion der mechanischen Verstärkung dieses Behälters und der Aufrechterhaltung eines Minimalraums zwischen diesem Behälter und wenigstens einem der folgenden Elemente hat; der am nächsten benachbarte Behälter in Kontakt mit dem Ende dieser Mittel, eine der Feststoffflächen, die am nächsten in Kontakt mit dem Ende dieser Mittel steht.

4. Vorrichtung nach einem der Ansprüche 1 bis 3, bei der dieses Bett aus Feststoffelementen zwischen diesem perforierten Träger und einer perforierten ähnlichen Einrichtung angeordnet ist, welche den Durchgang der Fluide zulässt und deren Perforationen ausreichend klein sind, um diese Elemente zwischen dem Träger und dieser Einrichtung zurückzuhalten.

5. Vorrichtung nach Anspruch 4, bei der das Bett aus Feststoffelementen dieses ganze Volumen der Destillations-Reaktionszone, das zwischen diesem Träger und dieser perforierten Einrichtung vorhanden ist, einnimmt.

6. Vorrichtung nach einem der Ansprüche 1 bis 5, dadurch gekennzeichnet, daß sie wenigstens zwei Destillations-Reaktionszonen umfaßt, die je wenigstens ein Bett aus Feststoffelementen enthalten, wobei diese Zonen miteinander nicht in Kontakt stehen.

7. Verwendung einer Vorrichtung nach einem der Ansprüche 1 bis 6 für die Durchführung chemischer Reaktionen und die Fraktionierung des Fraktionsgemisches.

8. Verwendung einer Vorrichtung nach einem der Ansprüche 1 bis 6 zur Herstellung von Ethern durch Reaktion von 3 bis 8 Kohlenstoffatomen pro Molekül aufweisenden Olefinen mit 1 bis 6 Kohlenstoffatomen pro Molekül aufweisenden Alkoholen.

9. Verfahren zur Herstellung eines Ethers durch Reaktion von 3 bis 8 Kohlenstoffatomen pro Molekül aufweisenden Olefinen mit 1 bis 6 Kohlenstoffatomen pro Molekül aufweisenden Alkoholen in Anwesenheit eines sauren Katalysators in Form von Feststoffpartikeln, wonach man gemeinsam die Reaktion und die Destillation der während dieser Reaktion gebildeten Produkte in einer Vorrichtung nach einem der Ansprüche 1 bis 6 durchführt und bei dem man kontinuierlich den gebildeten Ether gewinnt.

## Claims

1. A reaction-distillation apparatus comprising:
at least one reaction-distillation zone including at least one bed of solid elements disposed on a perforated support which gives passage to fluids and the perforations of which are small enough to retain said elements, the bed of solid elements including loose solid catalytic particles and a plurality of receptacles, the external jacket of which is permeable to fluids and impermeable to the solid catalytic particles, said receptacle having adequate mechanical properties to withstand the load of the loose catalyst without excessive deformation, characterised in that from 1 to 100% of the receptacles contain at least one distillation packing body.

2. The apparatus of claim 1, wherein a certain number of receptacles have at least one means with the dual function of mechanically reinforcing the receptacle and keeping a minimum space between the receptacle and at least one of the following elements: the closest receptacle in contact with the end of said means, one of the closest solid surfaces in contact with the end of said means.

3. The apparatus of claim 1 or 2, wherein a certain number of receptacles have at least two means with the dual function of mechanically reinforcing the receptacle and keeping a minimum space between the receptacle and at least one of the following elements: the closest receptacle in contact with the end of said means, one of the closest solid surfaces in contact with the end of said means.

4. The apparatus of any of claims 1 to 3, wherein the bed of solid elements is disposed between the perforated support and a similar perforated device which gives passage to fluids and the perforations of which are small enough to retain said elements between the support and the device.

5. The apparatus of claim 4, wherein the bed of solid elements occupies the whole volume of the reaction-distillation zone between the support and the perforated device.

6. The apparatus of any of claims 1 to 5, characterised in that it comprises at least two reaction-distillation zones, each containing at least one bed of solid elements, the zones not being in contact with one another.

7. Use of the apparatus of any of claims 1 to 6 for carrying out chemical reactions and fractionation of the reaction mixture.

8. Use of the apparatus of any of claims 1 to 6, for producing ethers by reacting olefins which have 3 to 8 carbon atoms per molecule with alcohols which have 1 to 6 carbon atoms per molecule.

9. A method of preparing an ether by reacting olefins which have 3 to 8 carbon atoms per molecule with alcohols which have 1 to 6 carbon atoms per molecule, in the presence of an acid catalyst in the form of solid particles, wherein the reaction and the distillation of the products formed during the reaction are carried out concurrently in the apparatus of any of claims 1 to 6, and wherein the ether formed is recovered continuously.
